# EUROPÄISCHE PATENTANMELDUNG

(11) **EP 2 818 584 A1**
(43) Veröffentlichungstag der Anmeldung: **31.12.2014**
(21) Anmeldenummer: 14173427.7
(22) Anmeldetag: 23.06.2014
(51) Int. Cl.: C25D 11/14, C25D 11/16, C25D 11/22, C25D 11/24, C25D 17/10, C25D 11/00

(54) **Verfahren zur elektrochemischen Herstellung spektral selektiver Absorberschichten auf einem Aluminiumsubstrat**

(30) Priorität: 28.06.2013 AT 5412013
(71) Anmelder: Pramer, Gerhard, 4813 Altmünster (AT)
(72) Erfinder: Pramer, Gerhard, 4813 Altmünster (AT)
(74) Vertreter: Patentanwaltskanzlei Hübscher

(57) **Zusammenfassung**

Es wird ein Verfahren zur elektrochemischen Herstellung spektral selektiver Absorberschichten auf einem Aluminiumsubstrat vorgeschlagen. Die Beschichtung erfolgt in folgenden Schritten. Entfetten des Substrats in einer alkalischen Lösung für vorzugsweise 10 - 15s. Aktivieren der Oberfläche durch Ätzen. Elektrolytische Oxidation der Oberfläche in Phosphorsäure. Elektrochemisches Färben der Oberfläche in Borsäure (H3BO3) und Nickelsulfat (NiSO4) für insbesondere wenigstens 5 und maximal 10min. Versiegeln der Oberfläche in einer wässerigen, Metallionen enthaltenden Lösung. Aufbringen einer transparenten Schicht, insbesondere einer Sol-Gel-Oxid-Schicht, auf die Oberfläche, die schützende, anti-reflektierende, anti-beschlagende und selbstreinigende Eigenschaften aufweist und anschließende Trocknung, insbesondere Luft- bzw. Heißlufttrocknung, des Substrats, wobei das Verhältnis von Badbreite zum Abstand zwischen Kathode zu Anode im Verfahrensschritt c) zwischen 3 und 4, vorzugsweise zwischen 3,2 und 3,6, liegt und wobei der Abstand zwischen der Rückseite der Aluminiumplatte und der parallelen Wand des Bades im Verfahrensschritt c) 1/5 bis 3/5, insbesondere 2/5, der Beckenbreite beträgt.

## Beschreibung

Die Erfindung bezieht sich auf ein Verfahren zur elektrochemischen Herstellung spektral selektiver Absorberschichten auf einem Aluminiumsubstrat zur Nutzbarmachung von Sonnenenergie. Insbesondere sollen spektral selektive schwarze oder dunkelfärbige Beschichtungen auf Aluminiumoberflächen aufgebracht werden.

Unter dem Begriff "spektral selektive Absorberbeschichtung" wird eine schwarze oder dunkelfärbige Beschichtung verstanden, welche eine Absorptionsrate im sichtbaren und nahen infraroten Bereich des Lichtes (von rund 380 - 1.900nm) von größer 80% aufweist. Die Emissionsrate im Infrarotbereich (von 2 bis 12µm) sollte kleiner 30% sein. Die entscheidende unerlässliche Eigenschaft von selektiven Beschichtungen ist eine Kombination von hoher Absorption im Wellenlängenbereich des sichtbaren Lichtes und im nahen Infrarotbereich und von einer geringen thermischen Emission im Infrarotbereich. Ferner muss die Beschichtung mechanisch stabil sein, gut handhabbar und stabil gegenüber üblichen Deformationen sein. Die spektralen Eigenschaften dürfen keine nennenswerte Verschlechterung durch Sonneneinstrahlung über einen Zeitraum von mindestens 10 Jahren erfahren, die Beschichtung muss thermische Zyklen und Sonneneinstrahlung über dieselbe Dauer unbeschadet überstehen. Die Beschichtung darf unter Sonnen- und/oder Wärmeeinstrahlung keine toxischen Dämpfe oder Gase abgeben und muss nach ihrer Lebensdauer einfach wiederverwertbar sein.

Die Elektrochemische Oxidation (das Eloxieren) von Aluminium ist ein gängiges Verfahren zur Herstellung dunkler selektiver Absorberschichten auf Aluminium. Beispielsweise beschreibt die US 4,148,294 A Sonnenkollektoren und ein Verfahren zu deren Herstellung, basierend auf dem Eloxieren von Aluminium oder Aluminiumverbindungen, gefolgt von einer Einbringung von Nickelpartikeln in die Poren der Oxidschicht. Eloxiert wurde in wässeriger Phosphorsäure als Elektrolyt bei Gleichspannung, Nickelpartikel wurden abgelagert in einer wässerigen Lösung aus Nickelsulfat, Borsäure und Glycerin unter Anlegen einer Wechselspannung. Es wurde festgestellt, dass die Verwendung von Schwefelsäure, Oxalsäure oder Chromsäure nicht zu so hoher spektraler Selektivität führt wie die Verwendung von Phosphorsäure.

Die US 4,267,218 A beschreibt einen Sonnenkollektor mit spektral selektiven Absorberschichten auf Basis einer schwarz gefärbten Aluminiumoxidschicht, die Zinn- oder Silberpartikel enthält. Das Eloxieren wird in wässeriger Schwefelsäure durchgeführt, das Färben der Oxidschicht erfolgt in einem Elektrolyten, der Zinn- oder Silberverbindungen enthält. Dieses Verfahren erfordert eine Vorbehandlung des Aluminiums mit Natriumhydroxidlösung gefolgt von einer Spülung mit Wasser sowie einer Behandlung mit Salpetersäure mit wiederum folgender Spülung mit Wasser. Diese Verfahrensschritte sowie Reinigung und Entfettung sind typische Vorbehandlungen für die meisten Eloxierprozesse. Eine weitere Methode zur Herstellung spektral selektiver Absorberschichten auf Aluminiumsubstraten ist in der AT 507 491 B1 ausführlich beschrieben.

Der größte Nachteil in den vorbeschriebenen Verfahren liegt in der Komplexität der eingesetzten Elektrolyte und der damit verbundenen Schwierigkeit der Reproduzierbarkeit bei gleichbleibender Qualität über lange Produktionsperoiden. Zudem entstehen eine große Anzahl unterschiedlichster Waschlösungen durch den Einsatz vieler verschiedener Chemikalien, die aufwendig getrennt und entsorgt werden müssen. Ein weiterer Nachteil, der bei galvanischen Beschichtungsprozessen von großen Aluminiumplatten auftritt, ist das Entstehen von sogenannten Kanteneffekten an der Rückseite des zu beschichtenden Aluminiumblechs. Diese entstehen durch die Elektronenströme, die auch auf der der Anode abgewandten Seite Beschichtungsprozesse in Gang setzen. Dadurch kommt es an den Kanten der Aluminiumbleche zu vermehrter Abscheidung des Schichtmaterials, was einen negativen Einfluss auf die Homogenität des Absorberbleches hat.

Zudem sind die bekannten Verfahren ausschließlich auf Aluminiumplatten und Aluminiumbänder anwendbar. Neue Kollektorgeometrien mit Vollflächenabsorbern, die das Fluidsystem bereits integriert haben, sind mit den bekannten Verfahren nicht beschichtbar.

Der Erfindung liegt somit die Aufgabe zugrunde, ein Verfahren der eingangs geschilderten Art anzugeben, mit dem die vorgenannten Nachteile vermieden werden können. Insbesondere soll die Anzahl der einzusetzenden Chemikalien verringert und soll eine Reproduzierbarkeit bei gleichbleibender Qualität über lange Produktionsperioden gewährleistbar werden.

Die Erfindung löst die gestellte Aufgabe durch folgende Verfahrensschritte: Entfetten des Substrats in einer alkalischen Lösung für vorzugsweise 10 - 15s. Aktivieren der Oberfläche durch Ätzen. Elektrolytische Oxidation der Oberfläche in Phosphorsäure. Elektrochemisches Färben der Oberfläche in Borsäure (H3B03) und Nickelsulfit (NiS04) für insbesondere wenigstens 5 und maximal 10min. Versiegeln der Oberfläche in einer wässerigen, Metallionen enthaltenden Lösung. Aufbringen einer transparenten Schicht, insbesondere einer Sol-Gel-Oxid-Schicht, auf die Oberfläche, die schützende, anti-reflektierende, antibeschlagende und selbstreinigende Eigenschaften aufweist und anschließende Trocknung, insbesondere Luft- bzw. Heißlufttrocknung, des Substrats, wobei das Verhältnis von Badbreite zum Abstand zwischen Kathode zu Anode bei der elektrolytischen Oxidation zwischen 3 und 4, vorzugsweise zwischen 3,2 und 3,6, liegt und wobei der Abstand zwischen der Rückseite der Aluminiumplatte und der parallelen Wand des Bades bei der elektrolytischen Oxidation 1/5 bis 3/5, insbesondere 2/5, der Beckenbreite beträgt.

Um den Kanteneffekt zu minimieren, liegt das Verhältnis von Badbreite zum Abstand zwischen Kathode zu Anode im Verfahrensschritt c) zwischen 3 und 4, vorzugsweise zwischen 3,2 und 3,6.

Die Erfindung umfasst ein neues Verfahren und eine neue Zusammenstellung der in diesem Verfahren, in den galvanischen Bädern, eingesetzten Elektrolyte. Mit dem Verfahren können spektral selektive Beschichtungen auf Aluminiumsubstrate in Plattenform aber auch auf Aluminium Formteile, bzw. auf beliebige Substrate mit Aluminiumoberfläche, aufgebracht werden. Durch eine Reduktion der Anzahl der eingesetzten Chemikalien ist das erfindungsgemäße Verfahren wesentlich kostengünstiger und umweltfreundlicher. Die erreichte Vereinfachung des Gesamtprozesses bedingt wesentlich geringere Anlageninvestitionskosten. Ferner werden dadurch erforderlichen Spülwassermengen deutlich reduziert, was geringere Abwassermengen zur Folge hat, womit der Prozess insgesamt deutlich umweltverträglicher ist. Durch das einstufige Eloxierverfahren können spektral hochselektive Beschichtungen mit erheblich verbesserten Korrosionsschutzeigenschaften erzielt werden. Durch eine genau vorgegebene Strom/Spannungskurve kann die Komplexität des Elektrolyts deutlich reduziert werden, ohne Einbußen bei den spektral selektiven Werten hinnehmen zu müssen. Dadurch wird das Verfahren insgesamt einfacher beherrschbar und damit wirtschaftlicher. Das eingesetzte Aluminiumsubstrat weist vorzugsweise eine Reinheit von mindestens 90%, bevorzugt von 95-99,5% auf. Das Substrat ist entweder aus reinem Aluminium oder ein beliebiges Substrat aus einem anderen Material wie Eisen, Stahl oder Kunststoffen mit einer einer Aluminiumoberfläche. Durch eine genau definierte Anordnung der Anoden und Kathoden kann der Chemieeinsatz im Elektrolyt reduziert werden, ohne dabei die solare Absorption oder infrarote Reflexion zu beeinflussen. Dadurch wird der Prozess stoffärmer und somit wirtschaftlicher.

Das Aktivieren der Oberfläche im Verfahrensschritt b) erfolgt insbesondere in einem Bad aus 2 - 15%-iger NaOH Lösung, vorzugsweise 3 - 8%iger NaOH Lösung, für wenigstens 3 min und maximal 10 min und anschließend in einem Bad aus 25 - 40%-iger HNO₃ Lösung für wenigstens 2 min und maximal 6 min.

Um die erforderliche Spülwassermenge zu reduzieren und dennoch genügend Porosität für den anschließenden Färbeprozess zu erreichen, reicht es aus, wenn die Konzentration der Phosphorsäure im Verfahrensschritt c) zwischen 0,01 und 5% liegt.

Um den Kanteneffekt zu minimieren sollte das Verhältnis von Badbreite zum Abstand zwischen Kathode zu Anode beim elektrochemischen Färben im Verfahrensschritt d) zwischen 5 und 7, vorzugsweise zwischen 5,8 und 6,6, liegen. Der Abstand zwischen der Rückseite der Aluminiumplatte und der parallelen Wand des Bades beträgt vzw. 1/5 bis 3/5, insbesondere 2/5, der Beckenbreite.

Das Versiegeln im Verfahrensschritt e) erfolgt vorzugsweise in einer Nickelionen, Tenside und/oder Fluoridionen enthaltenden Lösung. Anschließend wird das Aluminiumblech mit Wasser gespült.

Die im Verfahrensschritt f) aufzubringende transparente Schicht umfasst eine Kombination aus einem, zwei oder mehreren Halbleiteroxid(en) mit nanostrukturierten oder nanokristallinen Strukturen, wie insbesondere TiO₂, SnO₂, In₂O₃, MoO₃, WO₃ Bi₂O₃ und/oder dielektrischen Oxiden wie insbesondere SiOₓ, Al₂O₃ und ZrO₂ umfasst. Der Verfahrensschritt d) kann mit dem Verfahrensschritt e) kombiniert werden, wenn das Substrat zwischen Färbe- und Versiegelungsschritt gespült wird.

Der Erfindungsgegenstand beispielsweise wird in der Folge an Ausführungsbeispielen dargestellt.

### BEISPIEL I:

Eine Platte aus 99,5% reinem Aluminium in der Größe von 1m*1m*0,5mm wurde mit flüssiger Seife 5 min gereinigt. Nach einer Minute spülen mit Wasser wurde diese Platte mit 20 I 10% NaOH (technisch rein) wässrigen Lösung für 4 min behandelt. Nach wiederum einer Minuten spülen mit Wasser wurde die Platte mit Salpetersäure (20 Liter 15% HN03) für 2 Minuten behandelt.

Nach diesem Verfahrensschritt wurde die Platte für 2 Minuten mit fließendem Wasser gespült und in ein Elektrolyt mit 470 Liter 15% Phosphorsäure getaucht. Der Abstand zwischen Aluminiumplatte und Edelstahl Gegenelektrode betrug 4/5 der Beckenbreite. Der Abstand zwischen der Rückseite der Aluminiumplatte und der Wand des Bades betrug 1/100 der Beckenbreite. Zwischen der Aluminiumplatte und der Edelstahl Gegenelektrode wurden 15V Gleichstrom angelegt. Die eloxierte Al-Platte wurde dann aus dem Eloxalbad gehoben und für 2 Minuten mit Wasser gespült. Danach wurde diese Platte in einem Elektrolyt mit 470 Liter 40 g / I Nickelsulfat-Hexahydrat (NiS04 6H20) + 20 g / I Borsäure H3B03 und 0,1% Tensid getaucht. Der Abstand zwischen Aluminiumplatte und Edelstahl Gegenelektrode betrug wieder 4/5 der Beckenbreite. Der Abstand zwischen der Rückseite der Aluminiumplatte und der Wand des Bades betrug 1/100 der Beckenbreite. Innerhalb 1,5 Minuten wurde eine Wechselspannung von 0 bis auf 14 Volt ansteigend angelegt und dann 2 Minuten gehalten. Nach dem Färbevorgang der Aluminiumplatte wurde diese mit Wasser gespült und mit einem Heißluftföhn getrocknet.

Die Al-Platte war nach dem Trocknen schwarz, eine Messung ergab 86-90% solaren Absorptionsgrad und 12-13% infraroten Emissionsgrad.

Als negatives Merkmal wurde unzureichende Homogenität und ein ausgeprägter Kanteneffekt festgestellt. So wurde im Zentrum der Platte eine Absorptionswert von 90% gemessen, im Randbereich hingegen nur 86%. Außerdem war die schwarze Farbe zum Rand hin heller werdend.

### BEISPIEL II

Das in Beispiel I beschriebene Verfahren wurde wiederholt, mit der Ausnahme, dass beim Eloxieren der Abstand zwischen der Rückseite der Aluminiumplatte und der Wand des Bades 2/5 der Beckenbreite betrug und der Abstand zwischen der Aluminiumplatte und der Edelstahl Gegenelektrode 2/9 der Beckenbreite. Im elektrochemischen Färbebad betrug der Abstand zwischen der Rückseite der Aluminiumplatte und der Wand des Bades 2/5 der Beckenbreite und der Abstand zwischen der Aluminiumplatte und Edelstahl Gegenelektrode 1/7 der Beckenbreite.

Das so hergestellte Absorberblech ist homogen schwarz. Die anschließend durchgeführte Messung ergab einen Absorptionswert von 90,1% im Zentrum der Platte und 90,5% am Rand der Platte, der Emissionswert lag bei 13,5%. Somit hat das richtige Verhältnis der Abstände zu einer umfassenden Homogenität der Oberfläche geführt.

## Patentansprüche

1. Verfahren zur elektrochemischen Herstellung spektral selektiver Absorberschichten auf einem Aluminiumsubstrat mit folgenden Schritten:
a) entfetten des Substrats in einer alkalischen Lösung für vorzugsweise 10 - 15s,
b) aktivieren der Oberfläche durch Ätzen,
c) elektrolytische Oxidation in Phosphorsäure,
d) elektrochemisches Färben in Borsäure (H₃BO₃) und Nickelsulfit (NiSO₄) für insbesondere wenigstens 5min und maximal 10min,
e) versiegeln in einer wässerigen Metallionen enthaltenden Lösung,
f) aufbringen einer transparenten Schicht, insbesondere einer Sol-Gel-Oxid-Schicht, die schützende, anti-reflektierende, anti-beschlagende und selbstreinigende Eigenschaften aufweist,
g) Trocknung, insbesondere Luft- bzw. Heißlufttrocknung, des Substrats,
wobei das Verhältnis von Badbreite zum Abstand zwischen Kathode zu Anode im Verfahrensschritt c) zwischen 3 und 4, vorzugsweise zwischen 3,2 und 3,6, liegt und wobei der Abstand zwischen der Rückseite der Aluminiumplatte und der parallelen Wand des Bades im Verfahrensschritt c) 1/5 bis 3/5, insbesondere 2/5, der Beckenbreite beträgt.

2. Verfahren nach Anspruch 1, **dadurch gekennzeichnet, dass** das Aktivieren der Oberfläche im Verfahrensschritt b) in einem Bad aus 2 - 15%-iger NaOH Lösung, vorzugsweise 3 - 8%iger NaOH Lösung, für wenigstens 3min und maximal 10min und anschließend in einem Bad aus 25 - 40%-iger HNO₃ Lösung für wenigstens 2min und maximal 6min erfolgt.

3. Verfahren nach Anspruch 1 oder 2, **dadurch gekennzeichnet, dass** die Konzentration der Phosphorsäure im Verfahrensschritt c) zwischen 0,01 und 5% liegt.

4. Verfahren nach einem der Ansprüche 1 bis 3, **dadurch gekennzeichnet, dass** das Verhältnis von Badbreite zum Abstand zwischen Kathode zu Anode beim elektrochemischen Färben im Verfahrensschritt d) zwischen 5 und 7, vorzugsweise zwischen 5,8 und 6,6 liegt.

5. Verfahren nach einem der Ansprüche 1 bis 4, **dadurch gekennzeichnet, dass** der Abstand zwischen der Rückseite der Aluminiumplatte und der parallelen Wand des Bades beim elektrochemischen Färben im Verfahrensschritt d) 1/5 bis 3/5, insbesondere 2/5, der Beckenbreite beträgt.

6. Verfahren nach einem der Ansprüche 1 bis 5, **dadurch gekennzeichnet, dass** der Abstand zwischen der Rückseite der Aluminiumplatte und der parallelen Wand des Bades 1/2 bis 1/3 des Abstandes zwischen Kathode und Anode beträgt.

7. Verfahren nach einem der Ansprüche 1 bis 6, **dadurch gekennzeichnet, dass** das versiegeln im Verfahrensschritt e) in einer Nickelionen, Tenside und/oder Fluoridionen enthaltenden Lösung, bevorzugt erfolgt.

8. Verfahren nach einem der Ansprüche 1 bis 7, **dadurch gekennzeichnet, dass** die im Verfahrensschritt f) das aufzubringende transparente Schicht eine Kombination aus ein, zwei oder mehreren Halbleiteroxiden mit nanostrukturierten oder nanokristallinen Strukturen, wie insbesondere TiO₂, SnO₂, In₂O₃, MoO₃, WO₃ Bi₂O₃ und/oder dielektrischen Oxiden wie insbesondere SiOₓ, Al₂O₃ und ZrO₂ umfasst.
